# FASCICULE DE BREVET EUROPEEN

(11) **EP 2 335 381 B1**
(45) Date de publication et mention de la délivrance du brevet: **16.01.2013**
(21) Numéro de dépôt: 09747894.5
(22) Date de dépôt: 22.09.2009
(51) Int. Cl.: H04L 12/18, H04L 29/08

(54) **PROCEDE DE DIFFUSION DE DONNEES PAR UNE SOURCE MULTICAST AVEC DIFFUSION D'UN IDENTIFIANT DE LA STRATEGIE DE DIFFUSION DANS UN CANAL DE SIGNALISATION MULTICAST**
VERFAHREN ZUM BROADCASTING VON DATEN DURCH EINE MULTICAST-QUELLE MIT BROADCASTING EINER KENNUNG DER BROADCASTING-STRATEGIE IN EINEM MULTICAST-SIGNALISIERUNGSKANAL
METHOD OF BROADCASTING DATA BY A MULTICAST SOURCE WITH BROADCASTING OF AN IDENTIFIER OF THE BROADCASTING STRATEGY IN A MULTICAST SIGNALLING CHANNEL

(30) Priorité: 30.09.2008 FR 0856562
(43) Date de publication de la demande: 22.06.2011
(73) Titulaire: France Télécom, 75015 Paris (FR)
(72) Inventeur: LEJEUNE, Sabine, F-22730 Tregastel (FR); HENNEQUIN, Jean-Baptiste, F-92320 Chatillon (FR); DUGOUJON, David, F-92130 Issy Les Moulineaux (FR); MORIN, Thomas, F-22560 Trebeurden (FR)
(74) Mandataire: Delumeau, François Guy
(86) Numéro de dépôt international: PCT/FR2009/051776
(87) Numéro de publication internationale: WO 2010/037945

(56) Documents cités:
- EP-A- 1 434 385
- EP-A- 1 615 403
- WO-A-2005/117345
- WO-A-2007/085763
- WO-A-2007/113447

## Description

### Arrière-plan de l'invention

La présente invention se situe dans le domaine des réseaux de télécommunication dits « de multidiffusion » dans lesquels une source peut diffuser des données vers une pluralité de destinataires.

Dans de tels réseaux, des routeurs construisent un arbre de réplication entre la source et les destinataires, de sorte qu'un paquet de données ne passe qu'une fois sur chaque lien du réseau et est répliqué par les routeurs pour atteindre chacun des destinataires.

Une telle technique de diffusion est connue sous le nom de technique "multicast".

L'utilisation d'un tel arbre de réplication permet de diffuser de l'information massivement avec une optimisation maximale des ressources réseau.

En revanche, les réseaux de diffusion multicast sont connus pour être intrinsèquement peu fiables, du fait que les données sont transportées conformément au protocole UDP, à savoir en mode non connecté.

Le document "P2P Multicast Library" disponible sur Internet à l'adresse http://pml.sourceforge.net/Technology/ propose une méthode pour fiabiliser un réseau multicast, dans laquelle des destinataires d'un flux diffusé peuvent récupérer des fragments non reçus de ce flux, auprès de pairs d'un réseau de pairs.

Selon cette méthode, une source du réseau pair à pair envoie aux différents destinataires un message comportant les caractéristiques d'une stratégie de diffusion des données par cette source.

Le document WO 2005/117345 A1 propose une méthode de diffusion de données par une source multicast.

Cette méthode présente un inconvénient majeur en ce qu'il est nécessaire, comme d'usage dans les réseaux de pairs, que la source connaisse les destinataires à qui elle doit envoyer ces caractéristiques de stratégie.

Au surplus, une telle méthode nécessite la sécurisation de l'envoi des caractéristiques de stratégie, par exemple par un mécanisme de code de correction d'erreur ou par la mise en oeuvre d'un protocole spécifique par lesquels les destinataires peuvent demander la réémission des caractéristiques de stratégie, l'une ou l'autre de ces solutions étant susceptible d'encombrer fortement le réseau lorsque le nombre de destinataires augmente ou lorsque la fréquence de changements de stratégies par la source augmente.

### Objet et résumé de l'invention

Selon un premier aspect, l'invention vise un procédé de diffusion de données par une source multicast vers une pluralité de récepteurs dans un réseau de télécommunication selon une stratégie de diffusion.

Ce procédé comporte :
- une étape de réception de paramètres ;
- une étape d'ajustement de la stratégie de diffusion en fonction de ces paramètres ; et
- en cas de modification de ladite stratégie, une étape de diffusion, dans un canal de signalisation multicast, d'un identifiant d'une nouvelle stratégie de diffusion.

Corrélativement, l'invention vise une source de données diffusées vers une pluralité de récepteurs dans un réseau de télécommunication selon une stratégie de diffusion, cette source comportant :
- des moyens de réception de paramètres ;
- des moyens d'ajustement de la stratégie de diffusion en fonction de ces paramètres ; et
- des moyens de diffusion, dans un canal de signalisation multicast, d'un identifiant d'une nouvelle stratégie de diffusion.

Aussi, et d'une façon générale, l'invention propose un ajustement de la stratégie de diffusion de données par des sources, en fonction de paramètres remontés vers ces sources.

Dans ce document, la stratégie de diffusion d'une source pour diffuser des données est définie par le nombre de flux utilisés par cette source et par les caractéristiques de chacun de ces flux.

Conformément à l'invention, après chaque modification de stratégie, la source diffuse un identifiant de cette nouvelle stratégie dans un canal de signalisation multicast afin d'en informer les récepteurs.

Grâce à cette caractéristique, il n'est pas nécessaire, pour la source, de connaître le destinataire de l'information de changement de stratégie.

Par ailleurs, le fait d'envoyer un identifiant de stratégie, plutôt que les caractéristiques de la stratégie elle-même, évite avantageusement la mise en place d'un mécanisme de sécurisation spécifique, charge au destinataire d'aller récupérer par eux-mêmes la stratégie dans des messages unicast, sécurisés par nature.

Conformément à un aspect de l'invention, les paramètres remontés vers ces sources peuvent être de différentes natures.

Il peut par exemple s'agir de statistiques de réception de fragments des données par un ou plusieurs récepteurs, ces statistiques pouvant porter sur le nombre de fragments reçus ou sur le nombre de fragments non reçus.

Il peut aussi s'agir de débits de réception attendus par un ou plusieurs récepteurs.

Il peut aussi s'agir d'une donnée agrégée (par exemple une moyenne) comprenant des débits de réception attendus par plusieurs récepteurs.

Dans ces trois cas, la source définit elle-même sa nouvelle stratégie à partir des paramètres reçus et la met en oeuvre après avoir diffusé, dans le canal de signalisation multicast, un identifiant de cette nouvelle stratégie.

Conformément à l'invention, les paramètres remontés vers la source peuvent aussi être des caractéristiques de cette nouvelle stratégie. Auquel cas, la source ne définit pas elle-même la nouvelle stratégie, mais applique celle qui lui est imposée.

Selon un deuxième aspect, l'invention vise également un procédé de supervision de la diffusion de données émises par une source multicast vers une pluralité de récepteurs dans un réseau de télécommunication selon une stratégie de diffusion. Ce procédé comporte :
- une étape d'envoi à au moins un desdits récepteurs d'informations relatives à la source, lesdites informations comprenant une identification d'un canal de signalisation multicast associé à la source, destiné à diffuser un identifiant de ladite stratégie ;
- une étape d'obtention, en provenance d'au moins un de ces récepteurs, de statistiques de réception par ledit récepteur de fragments des données diffusées par la source selon ladite stratégie ;
- une étape d'obtention de paramètres à partir de ces statistiques, les paramètres comportant ;
   - une donnée agrégée comprenant des débits de réception attendus par une pluralité des récepteurs ; ou
   - des caractéristiques d'une nouvelle stratégie de diffusion desdites données ;
- une étape d'envoi des paramètres à la source.

Corrélativement, l'invention vise également un superviseur de la diffusion de données émises par une source multicast selon une stratégie de diffusion vers une pluralité de récepteurs dans un réseau de télécommunication, ce superviseur comportant :
- des moyens d'envoi à au moins un desdits récepteurs d'informations relatives à la source, lesdites informations comprenant une identification d'un canal de signalisation multicast associé à la source, destiné à diffuser un identifiant de ladite stratégie ;
- des moyens d'obtention, en provenance d'au moins un de ces récepteurs, de statistiques de réception par ledit récepteur de fragments des données diffusées par la source selon ladite stratégie ;
- des moyens d'obtention de paramètres à partir de ces statistiques, ces paramètres comportant au moins :
   - une donnée agrégée (AG) comprenant des débits de réception (EXP_DB) attendus par une pluralité desdits récepteurs ; ou
   - des caractéristiques (CS) d'une nouvelle stratégie de diffusion desdites données ;
- des moyens d'envoi des paramètres à la source.

Conformément à ce deuxième aspect de l'invention, on introduit un superviseur chargé de collecter des statistiques de réception de fragments de données de plusieurs récepteurs, et de définir, à partir de ces statistiques, les paramètres devant être remontés vers une source.

Ces paramètres sont constitués par une donnée agrégée représentative des débits de réception attendus par plusieurs récepteurs, la source étant responsable de la définition de sa stratégie de diffusion à partir de cette donnée agrégée, ou par des caractéristiques de la nouvelle stratégie définie par le superviseur et imposée à la source.

Dans un mode particulier de réalisation de ce deuxième aspect de l'invention, le procédé de supervision comporte :
- une étape d'obtention du nombre de flux maximal diffusés simultanément dans le réseau ;
- une étape d'envoi de ce nombre à la source.

Cette caractéristique permet avantageusement de limiter le nombre de flux multicast diffusés simultanément dans le réseau.

Sur réception d'une telle information, une source de diffusion peut modifier sa stratégie pour limiter le nombre de flux qu'elle émet, de façon à garantir que le nombre total de flux multicast diffusés dans le réseau ne dépasse pas ce nombre maximal.

Dans un mode particulier de réalisation de ce deuxième aspect de l'invention, le procédé de supervision comporte :
- une étape d'envoi d'une requête à un routeur du réseau pour qu'il contrôle l'abonnement des récepteurs connectés à ce routeur aux flux multicast diffusés dans le réseau.

Selon un troisième aspect, l'invention vise un procédé de réception d'au moins un flux de données diffusé par au moins une source multicast dans un réseau de télécommunication selon une stratégie de diffusion, ce procédé comportant :
- une étape de détection, dans un canal de signalisation multicast diffusé par une source des données, d'un identifiant d'une nouvelle stratégie de diffusion mise en oeuvre par la source ; et
- une étape de mise en oeuvre d'une nouvelle stratégie de réception de ces données.

Corrélativement, l'invention vise aussi un récepteur d'au moins un flux de données diffusé par au moins une source multicast selon une stratégie de diffusion dans un réseau de télécommunication, ce récepteur comportant :
- des moyens de détection, dans un canal de signalisation multicast diffusé par une source de ces données, d'un identifiant d'une nouvelle stratégie de diffusion mise en oeuvre par la source ; et
- des moyens de mise en oeuvre d'une nouvelle stratégie de réception des données.

Dans un mode particulier de réalisation, ce procédé comporte une étape d'envoi de statistiques de réception de fragments de flux à un superviseur de diffusion conforme à l'invention.

Dans un mode particulier de réalisation de l'invention, le récepteur envoie également à l'entité précitée un débit de réception idéal souhaité par ce récepteur.

Dans un mode particulier de réalisation de l'invention, le récepteur obtient au moins un fragment des données auprès d'un pair d'un réseau de pairs.

Dans un mode particulier de réalisation de l'invention, pour définir la nouvelle stratégie de réception desdites données :
- le récepteur évalue au moins un taux de pertes desdites données sur ledit au moins un flux ; et
- le récepteur se désabonne d'au moins un desdits flux si ledit taux de pertes dépasse un seuil prédéterminé.

Les caractéristiques et avantages particuliers de la source de données, du superviseur et du récepteur conformes à l'invention sont similaires à ceux du procédé de diffusion de données, du procédé de supervision et du procédé de réception mentionnés ci-dessus.

Dans un mode particulier de réalisation, les différentes étapes des procédés de diffusion, de supervision et de réception sont déterminées par des instructions de programmes d'ordinateurs.

En conséquence l'invention vise aussi :
- un programme d'ordinateur sur un support d'informations, ce programme étant susceptible d'être mis en oeuvre dans une source multicast ou plus généralement dans un ordinateur, ce programme comportant des instructions adaptées à la mise en oeuvre des étapes d'un procédé de diffusion tel que décrit ci-dessus ;
- un programme d'ordinateur sur un support d'informations, ce programme étant susceptible d'être mis en oeuvre dans un superviseur multicast ou plus généralement dans un ordinateur, ce programme comportant des instructions adaptées à la mise en oeuvre des étapes d'un procédé de supervision tel que décrit ci-dessus ; et
- un programme d'ordinateur sur un support d'informations, ce programme étant susceptible d'être mis en oeuvre dans un récepteur ou plus généralement dans un ordinateur, ce programme comportant des instructions adaptées à la mise en oeuvre des étapes d'un procédé de réception tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur, et comportant des instructions d'un programme d'ordinateur permettant l'exécution des étapes du procédé de diffusion tel que mentionné ci-dessus.

L'invention vise aussi un support d'enregistrement lisible par un ordinateur, et comportant des instructions d'un programme d'ordinateur permettant l'exécution des étapes du procédé de supervision tel que mentionné ci-dessus.

L'invention vise aussi un support d'enregistrement lisible par un ordinateur, et comportant des instructions d'un programme d'ordinateur permettant l'exécution des étapes du procédé de réception tel que mentionné ci-dessus.

Chacun de ces supports d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, chacun de ces supports d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, chacun de ces supports d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un superviseur, une pluralité de sources et de récepteurs conformes à l'invention dans une mise en oeuvre particulière de l'invention ;
- la figure 2 représente l'architecture matérielle d'une source conforme à l'invention ;
- la figure 3 représente l'architecture matérielle d'un récepteur conforme à l'invention ;
- la figure 4 représente l'architecture matérielle d'un superviseur conforme à l'invention ; et
- la figure 5 représente les principales étapes de procédés de diffusion, de supervision et de réception dans un mode particulier de réalisation de l'invention.

### Description détaillée d'un mode de réalisation

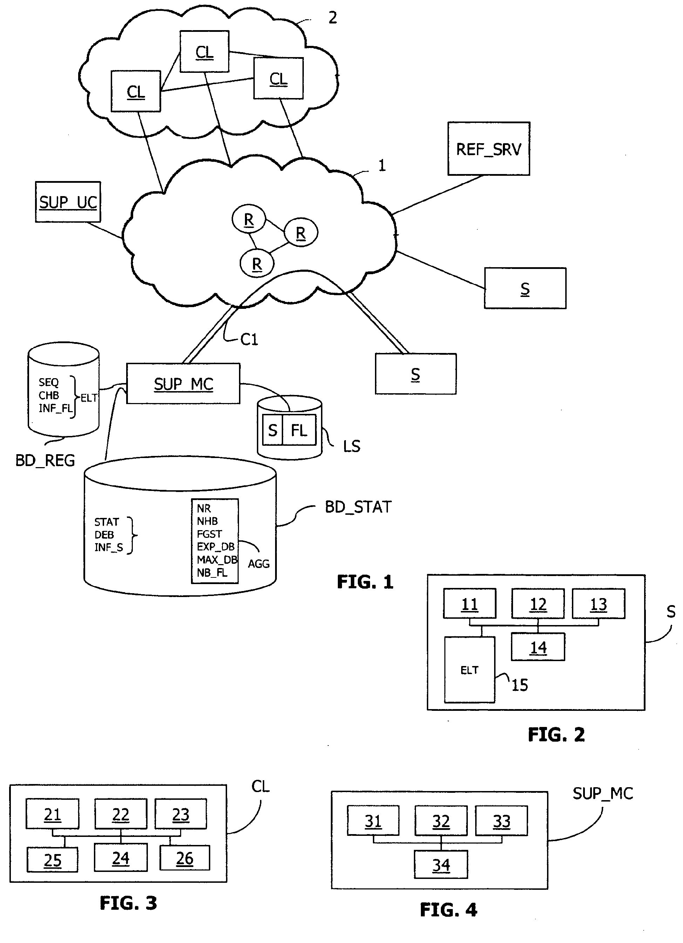

La **figure 1** illustre une mise en oeuvre de l'invention pour la multidiffusion d'un contenu de données (ci-après CONT) par des sources multicast S vers des récepteurs clients CL dans un réseau 1 de télécommunications.

Dans le cas général, le contenu CONT est mémorisé dans un fichier. Pour sa diffusion, ce fichier peut être découpé en plusieurs blocs lorsqu'une source multicast S ou un récepteur client CL dispose d'une limitation sur la taille des fichiers qu'elle ou il peut manipuler. Dans les autres cas, le contenu CONT ne sera représenté que par un seul bloc.

Dans le mode de réalisation décrit ici, on souhaite qu'un récepteur client CL puisse vérifier l'intégrité des données reçues et on découpe chaque bloc en un ou plusieurs fragments, la taille d'un fragment étant définie en fonction du mécanisme mis en oeuvre pour vérifier son intégrité.

Au niveau le plus atomique, chaque fragment est découpé en segments, un segment pouvant être encapsulé dans un paquet UDP pour sa diffusion par une source multicast S dans le réseau 1.

Conformément à l'invention, la diffusion d'un contenu de données CONT peut faire intervenir une ou plusieurs sources multicast S, chaque source utilisant un ou plusieurs flux multicast.

Le nombre de flux utilisés par une source multicast S, et les caractéristiques de chacun de ses flux définissent la stratégie de multidiffusion de cette source S. Chaque stratégie porte un numéro de séquence SEQ qui l'identifie de manière unique.

Dans cet exemple, un superviseur multicast SUP_MC permet aux récepteurs clients CL de connaitre les sources multicast S et les flux diffusés par ces sources. A cet effet, le superviseur multicast SUP_MC comporte, dans l'exemple de réalisation décrit ici, une liste LS des sources multicast S et des flux FL diffusés par ces sources.

Dans le mode de réalisation décrit ici, une source multicast S a l'architecture matérielle d'un ordinateur conventionnel, tel que représenté à la **figure 2**.

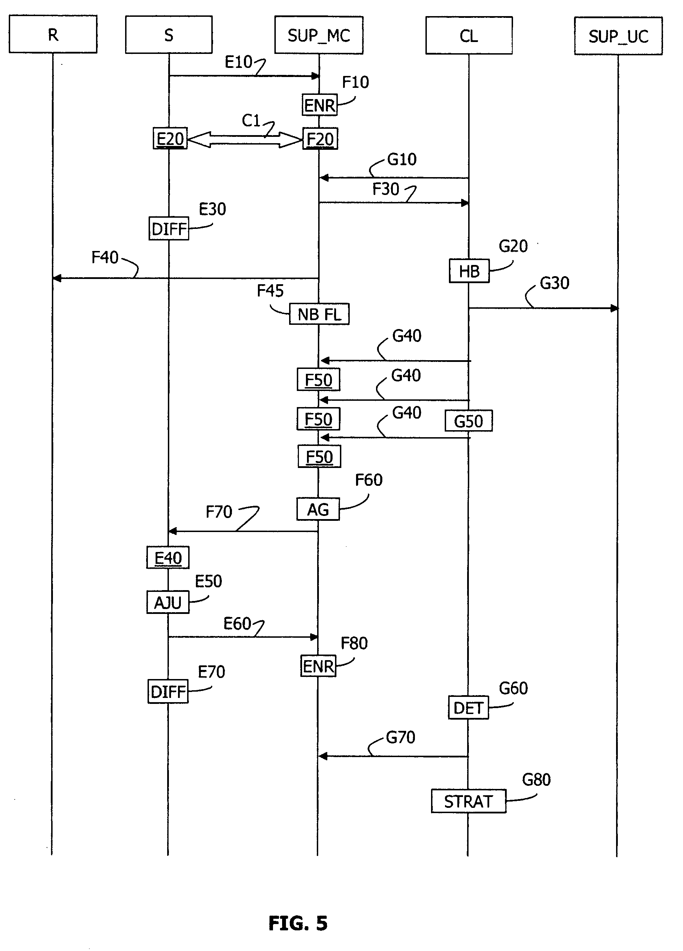

Une telle source multicast S comporte notamment un processeur 11, une mémoire vive de type RAM 12 et une mémoire morte de type ROM 13. Cette mémoire morte 13 constitue un support d'enregistrement conforme à l'invention, lisible par la source multicast S, sur lequel est enregistré un programme d'ordinateur conforme à l'invention, ce programme comportant des instructions pour l'exécution des étapes d'un procédé de diffusion selon l'invention, les principales étapes E10 à E70 de ce procédé étant représentées à la figure 5.

La source multicast S comporte des moyens pour s'enregistrer auprès du serveur multicast SUP_MC.

Conformément à l'invention, la source multicast S peut faire varier sa stratégie de diffusion au cours de la diffusion d'un contenu de données D.

Dans le mode de réalisation décrit ici, la source multicast S comporte une mémoire non volatile réinscriptible de type Flash 15, dans laquelle elle mémorise les éléments ELT définissant sa stratégie de multidiffusion courante.

La source multicast S comporte aussi des moyens 14 de communication sur le réseau 1, lui permettant notamment de recevoir des données émises par le superviseur multicast SUP_MC et de diffuser sur ce réseau :
- un flux de signalisation (« heart beat » en anglais) émis en multicast par la source S, et auquel les récepteurs clients CL peuvent s'abonner ; et
- au moins un flux de contenu, qui véhicule des éléments permettant aux récepteurs clients CL de déterminer la position des données reçues dans le contenu de données CONT (n° de fragment, n° de segment dans le fragment).

Conformément à l'invention, lorsqu'une source multicast S change de stratégie, elle modifie le numéro de séquence SEQ émis dans le canal de signalisation multicast « heart beat », de façon à en informer les récepteurs clients CL.

Conformément à l'invention, une source multicast S informe le superviseur multicast SUP_MC de tout changement de stratégie en lui communiquant les éléments ELT mis à jour, ceux-ci comportant les caractéristiques INF_FL ajustées de chacun des flux émis par cette source S ainsi que les caractéristiques CHB de son flux de signalisation « heart beat ».

Dans le mode de réalisation décrit ici, les récepteurs clients CL ont aussi l'architecture matérielle d'un ordinateur conventionnel, comme représenté à la **figure 3**.

Une tel récepteur client CL comporte notamment un processeur 21, une mémoire vive de type RAM 21 et une mémoire morte de type ROM 23. Cette mémoire morte 23 constitue un support d'enregistrement conforme à l'invention, lisible par le récepteur client CL, sur lequel est enregistré un programme d'ordinateur conforme à l'invention comportant des instructions pour l'exécution des étapes d'un procédé de réception selon l'invention, les principales étapes G10 à G80 de ce procédé étant représentées à la figure 5.

Le récepteur client CL comporte aussi des moyens 24 pour envoyer des données au superviseur multicast SUP_MC ou pour l'interroger afin d'obtenir une liste des sources multicast S et des caractéristiques ELT des flux FL diffusés par ces sources. Dans l'exemple de réalisation décrit ici, les moyens 24 de communication mettent en oeuvre le protocole HTTP, et les requêtes au superviseur multicast SUP_MC sont des messages GET conformes à ce protocole.

Le récepteur client CL comporte des moyens 25 de mise en oeuvre du protocole d'accès multicast IGMP, ces moyens permettant à ce client de s'abonner au trafic émis par une source multicast S de manière à recevoir le flux multicast de signalisation « heart beat » et le ou les flux de contenu diffusés par cette source S. Ces moyens sont connus de l'homme du métier et ne seront pas détaillés ici.

Conformément à l'invention, le récepteur client CL est apte à détecter un changement du numéro de séquence SEQ dans un flux de signalisation multicast « heart beat » et à interpréter un tel changement comme étant représentatif d'un changement de stratégie de diffusion par la source multicast, S émettrice de ce flux. Le récepteur client CL selon l'invention est apte à interroger le superviseur multicast MC pour obtenir les éléments ELT de cette nouvelle stratégie, suite à une telle détection.

Dans le mode de réalisation décrit ici, au moins certains récepteurs clients CL sont des pairs d'un réseau de pairs 2.

Ces récepteurs CL communiquent entre eux sur le réseau de pairs avec des moyens de communication référencés 26 pour s'échanger des fragments du contenu CONT qu'ils ont reçus, soit directement d'autres pairs (en unicast), soit par multidiffusion d'une ou plusieurs sources multicast, S. Ils sont aussi aptes à vérifier l'intégrité de ces fragments.

A cet effet, ils peuvent par exemple mettre en oeuvre un procédé de fiabilisation tel que décrit dans le document WO 2007/085763.

Dans le mode de réalisation décrit ici, le réseau de pairs 2 est un réseau de distribution de fichiers de type "File Swarming" mettant en oeuvre le protocole BitTorrent ou similaire et dans lequel chaque client récepteur CL pair de ce réseau peut envoyer aux autres pairs des fragments de fichiers, avant même la réception complète de ce fichier.

Dans ce mode de réalisation, le système selon l'invention comporte un superviseur unicast SUP_UC, auprès duquel un récepteur client CL peut s'enregistrer pour obtenir une liste d'autres pairs du réseau de pairs 2 avec lesquels il pourra communiquer pour échanger des fragments de fichier correspondants à un contenu donné.

Les récepteurs clients CL conformes à l'invention comportent des moyens pour envoyer régulièrement au superviseur multicast SUP_MC des statistiques STAT de réception du contenu et éventuellement un débit de réception EXP_DB idéal. Dans le mode de réalisation décrit ici, les statistiques STAT comportent la liste des fragments reçus et la liste des fragments non reçus par ce récepteur client CL.

Ces statistiques STAT portent au moins sur les fragments diffusés par les sources multicast, S. Lorsqu'un récepteur client CL est aussi pair du réseau de pairs 2, ces statistiques STAT portent également sur les fragments reçus d'autres pairs en unicast.

Conformément à l'invention, le récepteur client CL comporte des moyens 21, 22, 23 pour définir et modifier sa stratégie de réception. Ceux-ci seront développés infra en référence à l'étape G80 du procédé de réception mis en oeuvre par ce récepteur.

Dans le mode de réalisation décrit ici, le superviseur multicast SUP_MC a aussi l'architecture matérielle d'un ordinateur conventionnel, comme représenté à la **figure 4**.

Il comporte notamment un processeur 31, une mémoire vive de type RAM 32 et une mémoire morte de type ROM 33. Cette mémoire morte 33 constitue un support d'enregistrement conforme à l'invention, lisible par le superviseur multicast SUP_MC CL, sur lequel est enregistré un programme d'ordinateur conforme à l'invention comportant des instructions pour l'exécution des étapes d'un procédé de supervision selon l'invention, les principales étapes F10 à F80 de ce procédé étant représentées à la figure 5.

Le superviseur multicast SUP_MC comporte des moyens pour enregistrer une source multicast ayant un ou plusieurs flux à transmettre. A cet effet, il gère, dans le mode de réalisation décrit ici, une base de données BD_REG qui comporte, pour chaque source multicast S enregistrée, les paramètres des flux de signalisation « heart beat » et les caractéristiques des flux de données émis par cette source.

Dans un mode particulier de réalisation de l'invention, les éléments ELT transmis par une source multicast S au superviseur multicast SUP_MC pour son enregistrement sont :
- le numéro SEQ de séquence de la stratégie d'émission ;
- l'information CHB sur le canal heart beat de la source S, à savoir par exemple l'adresse IP multicast des heart beat, le port UDP de destination et la périodicité ; et
- pour chaque flux émis par la source S, une information INF_FL sur ce flux comportant par exemple l'adresse IP de destination multicast de ce flux, le port UDP de destination, le débit, les numéros de fragment du début et de la fin de la séquence, et une référence temporelle permettant à un client récepteur CL de calculer à quelle date approximative une donnée sera transmise.

Dans l'exemple de réalisation décrit ici, le superviseur multicast SUP_MC enregistre ces nouveaux éléments ELT dans la base de données BD_REG.

Dans le mode de réalisation décrit ici, le superviseur multicast SUP_MC comporte des moyens de communication 24 sur le réseau 1, qui lui permettent notamment de communiquer avec une source multicast S au moyen du protocole TCP.

Dans le mode de réalisation décrit ici, le superviseur multicast SUP_MC utilise ces moyens 24 pour établir un canal C1 de communication avec chaque source multicast S qui s'est enregistrée auprès de lui.

Conformément à l'invention, le superviseur multicast SUP_MC comporte des moyens pour recevoir d'au moins un client CL, des statistiques STAT sur les fragments reçus ou non par ce client, et éventuellement le débit EXP-DB de réception multicast idéal pour ce client CL, et une information INF_S sur les sources multicast S dont ce client CL reçoit les flux de signalisation « heart beat ».

Dans le mode de réalisation décrit ici, le superviseur multicast SUP_MC mémorise ces informations dans une base de données BD_STAT.

Dans le mode de réalisation décrit ici, les moyens 34 de communication du superviseur SUP_MC lui permettent de contrôler les routeurs R du réseau 1 pour limiter le nombre maximal NB_FL de flux multicast diffusés simultanément dans le réseau 1.

Conformément à l'invention, le superviseur multicast SUP_MC comporte des moyens 31, 32, 33 pour agréger le débit idéal EXP_DB et éventuellement les statistiques STAT, et les informations INF_S sur les sources multicast dans une donnée agrégée AG.

Dans l'exemple de réalisation décrit ici, la donnée agrégée AG créée par le superviseur multicast SUP_MC, pour une source multicast S et un contenu déterminés comporte :
- le nombre NR de clients CL récepteurs de ce contenu ;
- le nombre NHB de clients CL récepteurs du flux de heart beat de cette source ;
- des statistiques FGST de réception comportant par exemple, pour chaque fragment FG, le nombre de clients récepteurs CL ayant reçu ce fragment et le heart beat de la source ;
- un ou plusieurs débits idéaux EXP_DB attendus par les clients récepteurs CL ;
- le débit maximal MAX_DB des flux annoncés par les clients CL ; et éventuellement
- le nombre NB_FL de flux pouvant être supportés par le réseau de multidiffusion.

Dans l'exemple de réalisation décrit ici, la donnée agrégée AG est mémorisée dans la base de données BD_STAT.

Conformément à l'invention, le superviseur multicast SUP_MC comporte des moyens pour mettre cette donnée agrégée AG à disposition de la source multicast S concernée. Dans le mode de réalisation décrit ici, le superviseur multicast SUP_MC envoie la donnée agrégée AG à une source multicast S dans le canal de communication C1 établi entre le serveur multicast SUP_MC et cette source S par ses moyens de communication 34.

Dans un autre mode de réalisation, le superviseur multicast SUP_MC envoie à une source multicast S les caractéristiques CS de la stratégie qu'elle doit mettre en oeuvre.

Conformément à l'invention, une source multicast S comporte des moyens pour ajuster sa stratégie d'émission en fonction des données agrégées AG reçues du superviseur multicast SUP_MC et éventuellement des caractéristiques CS de stratégie indiquées par ce dernier.

La **figure 5** représente schématiquement une session de multidiffusion de données mettant en oeuvre l'invention.

Au cours d'une étape E10, une source multicast S s'enregistre auprès du superviseur multicast SUP_MC en lui envoyant les éléments ELT comportant les paramètres CHB de flux de heart beat et les caractéristiques SEQ, INF_FL de chaque flux qu'elle émet. Ces informations sont enregistrées par le superviseur multicast SUP_MC dans la base de données BD_REG au cours d'une étape F10.

Le superviseur multicast SUP_MC et la source multicast S établissent ensuite, respectivement au cours d'une étape F20 et E20, un canal de communication C1, par lequel ils peuvent communiquer au moyen du protocole TCP. Dans l'exemple de réalisation décrit ici, ce canal C1 est établi à l'initiative du superviseur SUP_MC.

Nous supposerons qu'au moins un récepteur client CL interroge le superviseur multicast SUP_MC, au cours d'une étape G10, pour obtenir la liste des sources multicast S diffusant un contenu CONT de son intérêt. Dans le mode de réalisation décrit ici, cette interrogation se fait au moyen du message GET du protocole HTTP. Préférentiellement, le récepteur client indique dans cette requête, le débit maximum accepté par ce client en réception.

Sur réception d'une telle requête, le superviseur multicast SUP_MC communique au récepteur client CL, au cours d'une étape F30, les sources multicast S diffusant avec un débit acceptable pour le récepteur client CL, et pour chacune de ces sources, les informations CHB sur le canal de signalisation « heart beat » de la source, et les informations INF_FL sur chaque flux diffusé par cette source.

Nous supposerons que la source multicast S commence à diffuser au cours d'une étape E30 :
- son flux de heart beat ; et à
- un ou plusieurs flux de contenu, suivant sa stratégie définie par les éléments ELT qu'elle a communiqués au superviseur multicast SUP_MC, à l'étape E10, lors de son enregistrement.

Pour recevoir des données diffusées par une source multicast S, un récepteur client CL s'abonne au cours d'une étape G20, au canal de signalisation heart beat et à un plusieurs flux diffusés par cette source S, les informations sur ces différents flux lui ayant été communiqués par le superviseur multicast SUP_MC au cours de l'étape F30.

Nous supposerons dans cet exemple qu'un récepteur client CL est un pair du réseau de pairs 2 et qu'il souhaite en outre pouvoir échanger des fragments du contenu CONT avec d'autres pairs de ce réseau.

A cet effet le pair s'enregistre auprès du superviseur unicast SUP_UC au cours d'une étape G30 et obtient de ce serveur une liste de pairs du réseau de pairs 2 souhaitant s'échanger des fragments de ce contenu.

Dans l'exemple de réalisation décrit ici, le superviseur SUP_MC envoie, au cours d'une étape F40, une requête RQ à un routeur R du réseau pour que ce routeur contrôle l'abonnement des récepteurs qui lui sont connectés au flux multicast diffusé dans le réseau. Plus précisément, ce contrôle d'abonnement consiste à vérifier qu'un récepteur n'accède pas à des flux autres que ceux auxquels il s'est abonné lors de l'étape G20.

Puis, au cours d'une étape F45, le superviseur SUP_MC obtient le nombre de flux maximal NB_FL pouvant être diffusés simultanément dans le réseau.

Conformément à l'invention, un récepteur client CL envoie régulièrement au superviseur multicast SUP_MC, au cours d'une étape référencée G40, les statistiques STAT sur les fragments reçus ou non par ce client, le débit EXP_DB de réception multicast idéal pour ce client CL et une information INF_S sur les sources multicast S dont ce client CL reçoit les flux de heart beat. Le superviseur multicast SUP_MC reçoit et enregistre ces statistiques dans la base de données BD_STAT au cours d'une étape F50.

Au cours d'une étape F60, le superviseur multicast SUP_MC agrège les statistiques STAT, le débit idéal EXP_DB attendu par chaque récepteur, le nombre maximal de flux NB_FL pouvant être supporté par le réseau 1, et les informations sur les sources multicast dans une donnée agrégée AG. Le superviseur multicast SUP_MC enregistre cette donnée agrégée AG dans la base de données BD_STAT au cours de cette même étape F60.

Puis, au cours d'une étape F70, le superviseur multicast SUP_MC envoie, via le canal C1 établi avec cette source, la donnée agrégée AG à la source S concernée, pour que celle-ci puisse ajuster sa stratégie. En variante, il lui impose une stratégie en lui communiquant les caractéristiques CS de cette dernière. Cette donnée agrégée AG ou les caractéristiques de stratégie CS sont reçues par la source au cours d'une étape E40.

La source multicast S ajuste sa stratégie au cours d'une étape E50, en fonction des données agrégées ou des caractéristiques de la stratégie CS définie par le superviseur.

Dès lors qu'elle modifie sa stratégie d'émission, la source multicast S, envoie au superviseur multicast SUP_MC, au cours d'une étape E60, les éléments ELT de la nouvelle stratégie mis à jour, ces éléments comportant les caractéristiques INF_FL ajustées de chacun des flux émis par la source S ainsi que les caractéristiques CHB de son flux de heart beat.

Ces éléments ELT mis à jour sont enregistrés par le superviseur multicast SUP_MC au cours d'une étape F80.

Simultanément, au cours d'une étape E70, la source multicast S modifie le numéro de séquence SEQ émis dans le flux de signalisation « heart beat » qu'elle diffuse, pour informer les récepteurs clients CL de son changement de stratégie de diffusion.

Le récepteur client CL détecte le nouveau numéro de séquence au cours d'une étape G60 de son procédé de réception.

Il peut alors décider de modifier sa stratégie de réception au cours d'une étape G80, en s'abonnant à de nouveaux canaux de diffusion multicast (découverts en interrogeant le superviseur multicast SUP_MC, au cours d'une étape G70), en se désabonnant de certains canaux multicast ou en allant chercher certains fragments manquants sur le réseau de pairs 2.

Pour définir sa stratégie de réception, un récepteur client CL pourra préférentiellement détecter les flux multi diffusés qu'il est apte à recevoir, s'abonner à ces flux, détecter les segments mal reçus dans ces flux, attendre une durée déterminée dans l'espoir de recevoir les segments manquants suite au changement de stratégie d'une ou plusieurs sources multicast, et en dernier recours obtenir les segments manquants auprès des pairs du réseau de pairs 2.

Dans un mode particulier de réalisation de l'invention, lorsqu'un client détecte un nombre important de paquets perdus, il se désabonne d'un ou plusieurs flux multicast. Cette caractéristique permet avantageusement de contrôler la congestion sur le réseau multicast 1, en évitant qu'un client récepteur CL ne s'abonne à un nombre de flux trop important au vu des capacités du réseau 1.

A cet effet, dans un mode particulier de réalisation de l'invention, un récepteur client CL détermine le taux de perte total de segments et le taux de pertes par flux.

Si le taux de perte ne concerne qu'un ou certains flux, il est probable que la raison soit une congestion entre la source multicast S de ce flux et le récepteur client CL. Auquel cas le récepteur client CL pourra se désabonner de ce flux temporairement en espérant que la congestion disparaisse.

Mais si le taux de perte est réparti sur l'ensemble des flux, le récepteur client CL diminuera le nombre de flux auxquels il est abonné et cherchera à obtenir les fragments manquants auprès des pairs du réseau 2.

Comme expliqué précédemment, l'invention permet avantageusement de modifier les stratégies de diffusion d'un contenu par une source multicast.

De façon non limitative, les stratégies de diffusion suivantes peuvent être utilisées dans l'invention :
- stratégie flux unique : stratégie dans laquelle la source diffuse tout le contenu en boucle dans un flux unique ; et
- stratégie simple multi-flux déphasés : cette stratégie s'applique lorsqu'une source dispose intégralement du contenu à diffuser dès le début de la diffusion. La source construit N flux (N étant le nombre maximum de flux déterminé par configuration de la source), chacun diffusant avec le débit idéal indiqué par le superviseur multicast SUP_MC la totalité du contenu avec un déphasage dans le temps.

## Revendications

1. Procédé de diffusion de données par une source multicast (S) vers une pluralité de récepteurs (CL) dans un réseau de télécommunication (1) selon une stratégie de diffusion, **caractérisé en ce qu'**il comporte :
- une étape (E40) de réception de paramètres (STAT, AG, CS) ;
- une étape (E50) d'ajustement de ladite stratégie en fonction desdits paramètres ; et
- en cas de modification de ladite stratégie, une étape (E70) de diffusion, dans un canal de signalisation multicast, d'un identifiant (SEQ) d'une nouvelle stratégie de diffusion.

2. Procédé de diffusion selon la revendication 1, **caractérisé en ce que** lesdits paramètres comportent au moins l'un des éléments appartenant au groupe comprenant :
- des statistiques (STAT) de réception de fragments desdites données par au moins un desdits récepteurs (CL) ;
- un débit de réception (EXP_DB) attendu par au moins un desdits récepteurs (CL) ;
- un nombre maximal (NB_FL) de flux pouvant être supporté par ledit réseau (1) ;
- une donnée agrégée (AG) comprenant des débits de réception (EXP_DB) attendus par une pluralité desdits récepteurs (CL) ;
- des caractéristiques (CS) de ladite nouvelle stratégie de diffusion.

3. Procédé de supervision de la diffusion de données émises par une source multicast (S) vers une pluralité de récepteurs (CL) dans un réseau de télécommunication (1) selon une stratégie de diffusion, **caractérisé en ce qu'**il comporte :
- une étape (F30) d'envoi à au moins un desdits récepteurs d'informations relatives à la source, lesdites informations comprenant une identification d'un canal de signalisation multicast associé à la source, destiné à diffuser un identifiant (SEQ) de ladite stratégie ;
- une étape (F50) d'obtention, en provenance du récepteur (CL), de statistiques (STAT) de réception par ledit récepteur de fragments desdites données diffusées par la source selon ladite stratégie ;
- une étape (F60) d'obtention de paramètres (CS, AG) à partir desdites statistiques (STAT), lesdits paramètres comportant ;
- une donnée agrégée (AG) comprenant des débits de réception (EXP_DB) attendus par une pluralité desdits récepteurs ; ou
- des caractéristiques (CS) d'une nouvelle stratégie de diffusion desdites données ;
- une étape (F70) d'envoi desdits paramètres (CS, AG) à ladite source.

4. Procédé de supervision selon la revendication 3, **caractérisé en ce qu'**il comporte :
- une étape d'obtention (F45) du nombre de flux maximal (NB_FL) diffusés simultanément dans ledit réseau (1) ; et
- une étape (F70) d'envoi de ce nombre à ladite source.

5. Procédé de supervision selon la revendication 3, **caractérisé en ce qu'**il comporte :
- une étape (F40) d'envoi d'une requête à un routeur (R) dudit réseau pour qu'il contrôle l'abonnement des récepteurs (CL) connectés à ce routeur (R) aux flux multicast diffusés dans ledit réseau (1).

6. Procédé de réception d'au moins un flux de données diffusé par au moins une source multicast (S) dans un premier réseau de télécommunication (1) selon une stratégie de diffusion, **caractérisé en ce qu'**il comporte :
- une étape (G60) de détection, dans un canal de signalisation multicast diffusé par une source (S) desdites données, d'un identifiant (SEQ) d'une nouvelle stratégie de diffusion mise en oeuvre par ladite source (S) ; et
- une étape (G80) de mise en oeuvre d'une nouvelle stratégie de réception desdites données.

7. Procédé de réception selon la revendication 6, **caractérisé en ce qu'**il comporte au moins une étape (G40) d'envoi de statistiques (STAT) de réception de fragments dudit flux à un superviseur de diffusion (SUP_MC) dudit réseau (1).

8. Procédé de réception selon la revendication 6, **caractérisé en ce qu'**il comporte au moins une étape (G50) d'obtention d'au moins un fragment desdites données auprès d'un pair (CL) d'un réseau de pairs (2).

9. Procédé de réception selon la revendication 6, **caractérisé en ce que** pour définir (G80) la nouvelle stratégie de réception desdites données :
- on évalue au moins un taux de pertes desdites données sur ledit au moins un flux ; et
- on se désabonne d'au moins un desdits flux si ledit taux de pertes dépasse un seuil prédéterminé.

10. Source de données diffusées vers une pluralité de récepteurs (CL) dans un réseau de télécommunication (1) selon une stratégie de diffusion, **caractérisée en ce qu'**elle comporte :
- des moyens (14) de réception de paramètres (STAT, AG, CS) ;
- des moyens (11) d'ajustement de ladite stratégie en fonction desdits paramètres ; et
- des moyens (14) de diffusion, dans un canal de signalisation multicast, d'un identifiant (SEQ) d'une nouvelle stratégie de diffusion.

11. Superviseur de la diffusion de données émises par une source multicast (S) selon une stratégie de diffusion vers une pluralité de récepteurs (CL) dans un réseau de télécommunication (1), **caractérisé en ce qu'**il comporte :
- des moyens d'envoi à au moins un desdits récepteurs d'informations relatives à la source, lesdites informations comprenant une identification d'un canal de signalisation multicast associé à la source, destiné à diffuser un identifiant (SEQ) de ladite stratégie ;
- des moyens (34) d'obtention, en provenance d'au moins un desdits récepteurs (CL), de statistiques (STAT) de réception par ledit récepteur de fragments desdites données diffusés par la source selon ladite stratégie ;
- des moyens (31) d'obtention de paramètres (CS, AG) à partir desdites statistiques (STAT), lesdits paramètres comportant au moins :
- une donnée agrégée (AG) comprenant des débits de réception (EXP_DB) attendus par une pluralité desdits récepteurs ; ou
- des caractéristiques (CS) d'une nouvelle stratégie de diffusion desdites données ;
des moyens (35) d'envoi desdits paramètres (CS, AG) à ladite source.

12. Récepteur d'au moins un flux de données diffusé par au moins une source multicast (S) selon une stratégie de diffusion dans un premier réseau de télécommunication (1), **caractérisé en ce qu'**il comporte :
- des moyens (31) de détection, dans un canal de signalisation multicast diffusé par une source (S) desdites données, d'un identifiant (SEQ) d'une nouvelle stratégie de diffusion mise en oeuvre par ladite source (S) ; et
- des moyens (31) de mise en oeuvre d'une nouvelle stratégie de réception desdites données.

13. Programme d'ordinateur comportant des instructions pour l'exécution des étapes du procédé de diffusion de données selon la revendication 1 lorsque ledit programme est exécuté par un ordinateur.

14. Programme d'ordinateur comportant des instructions pour l'exécution des étapes du procédé de supervision selon la revendication 3 lorsque ledit programme est exécuté par un ordinateur.

15. Programme d'ordinateur comportant des instructions pour l'exécution des étapes du procédé de réception de données selon la revendication 5 lorsque ledit programme est exécuté par un ordinateur.

## Claims

1. Method for broadcasting data by a multicast source (S) to a plurality of receivers (CL) in a telecommunication network (1) according to a broadcasting strategy, **characterized in that** it comprises:
- a step (E40) of receiving parameters (STAT, AG, CS);
- a step (E50) of adjusting said strategy as a function of said parameters; and
- in the case of modification of said strategy, a step (E70) of broadcasting, in a multicast signalling channel, an identifier (SEQ) of a new broadcasting strategy.

2. Broadcasting method according to Claim 1, **characterized in that** said parameters comprise at least one of the elements belonging to the group comprising:
- statistics (STAT) of reception of fragments of said data by at least one of said receivers (CL);
- a receiving bit rate (EXP_DB) expected by at least one of said receivers (CL);
- a maximum number (NB_FL) of streams that can be supported by said network (1);
- an aggregated data item (AG) comprising receiving bit rates (EXP_DB) expected by a plurality of said receivers (CL);
- characteristics (CS) of said new broadcasting strategy.

3. Method for supervising the broadcasting of data transmitted by a multicast source (S) to a plurality of receivers (CL) in a telecommunication network (1) according to a broadcasting strategy, **characterized in that** it comprises:
- a step (F30) of sending to at least one of said receivers information relating to the source, said information comprising an identification of a multicast signalling channel associated with the source, designed to broadcast an identifier (SEQ) of said strategy;
- a step (F50) of obtaining, from the receiver (CL), statistics (STAT) of reception by said receiver of fragments of said data broadcast by the source according to said strategy;
- a step (F60) of obtaining parameters (CS, AG) from said statistics (STAT), said parameters comprising:
- an aggregated data item (AG) comprising reception bit rates (EXP_DB) expected by a plurality of said receivers; or
- characteristics (CS) of a new strategy for broadcasting said data;
- a step (F70) of sending said parameters (CS, AG) to said source.

4. Supervision method according to Claim 3, **characterized in that** it comprises:
- a step (F45) of obtaining the number of maximum streams (NB_FL) broadcast simultaneously in said network (1); and
- a step (F70) of sending this number to said source.

5. Supervision method according to Claim 3, **characterized in that** it comprises:
- a step (F40) of sending a request to a router (R) of said network so that it monitors the subscription of the receivers (CL) connected to this router (R) to the multicast streams broadcast in said network (1).

6. Method for receiving at least one data stream broadcast by at least one multicast source (S) in a first telecommunication network (1) according to a broadcasting strategy, **characterized in that** it comprises:
- a step (G60) of detecting, in a multicast signalling channel broadcast by a source (S) of said data, an identifier (SEQ) of a new broadcasting strategy used by said source (S); and
- a step (G80) of using a new strategy for receiving said data.

7. Receiving method according to Claim 6, **characterized in that** it comprises at least one step (G40) of sending statistics (STAT) of reception of fragments of said stream to a broadcasting supervisor (SUP_MC) of said network (1).

8. Receiving method according to Claim 6, **characterized in that** it comprises at least one step (G50) of obtaining at least one fragment of said data from a peer (CL) of a peer network (2).

9. Receiving method according to Claim 6, **characterized in that**, in order to define (G80) the new strategy for receiving said data:
- at least one loss rate of said data on said at least one stream is evaluated; and
- at least one of said streams is unsubscribed if said loss rate exceeds a predetermined threshold.

10. Source of data broadcast to a plurality of receivers (CL) in a telecommunication network (1) according to a broadcasting strategy, **characterized in that** it comprises:
- means (14) for receiving parameters (STAT, AG, CS);
- means (11) for adjusting said strategy as a function of said parameters; and
- means (14) for broadcasting, in a multicast signalling channel, an identifier (SEQ) of a new broadcasting strategy.

11. Supervisor of the broadcasting of data transmitted by a multicast source (S) according to a broadcasting strategy to a plurality of receivers (CL) in a telecommunication network (1), **characterized in that** it comprises:
- means for sending to at least one of said receivers information relating to the source, said information comprising an identification of a multicast signalling channel associated with the source, designed to broadcast an identifier (SEQ) of said strategy;
- means (34) of obtaining, from at least one of said receivers (CL), statistics (STAT) of reception by said receiver of fragments of said data broadcast by the source according to said strategy;
- means (31) of obtaining parameters (CS, AG) from said statistics (STAT), said parameters comprising at least:
- an aggregated data item (AG) comprising reception bit rates (EXP_DB) expected by a plurality of said receivers; or
- characteristics (CS) of a new strategy for broadcasting said data;
- means (35) for sending said parameters (CS, AG) to said source.

12. Receiver of at least one data stream broadcast by at least one multicast source (S) according to a broadcasting strategy in a first telecommunications network (1), **characterized in that** it comprises:
- means (31) for detecting, in a multicast signalling channel broadcast by a source (S) of said data, an identifier (SEQ) of a new broadcasting strategy used by said source (S); and
- means (31) for using a new strategy for receiving said data.

13. Computer program comprising instructions for the execution of the steps of the method for broadcasting data according to Claim 1, when said program is executed by a computer.

14. Computer program comprising instructions for the execution of the steps of the supervision method according to Claim 3, when said program is executed by a computer.

15. Computer program comprising instructions for the execution of the steps of the method for receiving data according to Claim 5, when said program is executed by a computer.

## Patentansprüche

1. Verfahren zur Rundsendung von Daten durch eine Multicast-Quelle (S) an eine Vielzahl von Empfängern (CL) in einem Telekommunikationsnetz (1) gemäß einer Rundsendungsstrategie, **dadurch gekennzeichnet, dass** es aufweist:
- einen Schritt (E40) des Empfangs von Parametern (STAT, AG, CS);
- einen Schritt (E50) der Anpassung der Strategie abhängig von den Parametern; und
- im Fall einer Änderung der Strategie, einen Schritt (E70) der Rundsendung, in einem Multicast-Signalisierungskanal, einer Kennung (SEQ) einer neuen Rundsendungsstrategie.

2. Rundsendungsverfahren nach Anspruch 1, **dadurch gekennzeichnet, dass** die Parameter mindestens eines der Elemente aufweisen, die zu der Gruppe gehören, die enthält:
- Statistiken (STAT) des Empfangs von Fragmenten der Daten durch mindestens einen der Empfänger (CL);
- einen von mindestens einem der Empfänger (CL) erwarteten Empfangsdurchsatz (EXP_DB);
- eine maximale Anzahl (NB_FL) von Strömen, die vom Netz (1) unterstützt werden können;
- einen aggregierten Datenwert (AG), der von einer Vielzahl der Empfänger (CL) erwartete Empfangsdurchsätze (EXP_DB) enthält;
- Merkmale (CS) der neuen Rundsendungsstrategie.

3. Verfahren zur Überwachung der Rundsendung von von einer Multicast-Quelle (S) an eine Vielzahl von Empfängern (CL) in einem Telekommunikationsnetz (1) gemäß einer Rundsendungsstrategie gesendeten Daten, **dadurch gekennzeichnet, dass** es aufweist:
- einen Schritt (F30) des Sendens an mindestens einen der Empfänger von die Quelle betreffenden Informationen, wobei die Informationen eine Identifikation eines der Quelle zugeordneten Multicast-Signalisierungskanals enthalten, der dazu bestimmt ist, eine Kennung (SEQ) der Strategie rundzusenden;
- einen Schritt (F50) des Erhalts, vom Empfänger (CL), von Statistiken (STAT) des Empfangs durch den Empfänger von Fragmenten der von der Quelle gemäß der Strategie rundgesendeten Daten;
- einen Schritt (F60) des Erhalts von Parametern (CS, AG) ausgehend von den Statistiken (STAT), wobei die Parameter aufweisen:
- einen aggregierten Datenwert (AG), der von einer Vielzahl der Empfänger erwartete Empfangsdurchsätze (EXP_DB) enthält; oder
- Merkmale (CS) einer neuen Rundsendungsstrategie der Daten;
- einen Schritt (F70) des Sendens der Parameter (CS, AG) an die Quelle.

4. Überwachungsverfahren nach Anspruch 3, **dadurch gekennzeichnet, dass** es aufweist:
- einen Schritt (F45) des Erhalts der maximalen Anzahl von Strömen (NB_FL), die gleichzeitig im Netz (1) rundgesendet werden; und
- einen Schritt (F70) des Sendens dieser Anzahl an die Quelle.

5. Überwachungsverfahren nach Anspruch 3, **dadurch gekennzeichnet, dass** es aufweist:
- einen Schritt (F40) des Sendens einer Anforderung an einen Router (R) des Netzes, damit er das Abonnement der mit diesem Router (R) verbundenen Empfänger (CL) auf die im Netz (1) rundgesendeten Multicast-Ströme prüft.

6. Empfangsverfahren mindestens eines Datenstroms, der von mindestens einer Multicast-Quelle (S) in einem ersten Telekommunikationsnetz (1) gemäß einer Rundsendungsstrategie rundgesendet wird, **dadurch gekennzeichnet, dass** es aufweist:
- einen Schritt (G60) der Erfassung, in einem von einer Quelle (S) der Daten rundgesendeten Multicast-Signalisierungskanal, einer Kennung (SEQ) einer neuen Rundsendungsstrategie, die von der Quelle (S) angewendet wird; und
- einen Schritt (G80) der Anwendung einer neuen Empfangsstrategie der Daten.

7. Empfangsverfahren nach Anspruch 6, **dadurch gekennzeichnet, dass** es mindestens einen Schritt (G40) des Sendens von Empfangsstatistiken (STAT) von Fragmenten des Stroms an einen Rundsendungsüberwacher (SUP_MC) des Netzes (1) aufweist.

8. Empfangsverfahren nach Anspruch 6, **dadurch gekennzeichnet, dass** es mindestens einen Schritt (G50) des Erhalts mindestens eines Fragments der Daten bei einem Peer (CL) eines Peer-Netzwerks (2) aufweist.

9. Empfangsverfahren nach Anspruch 6, **dadurch gekennzeichnet, dass**, um die neue Empfangsstrategie der Daten zu definieren (G80):
- mindestens eine Verlustrate der Daten in dem mindestens einem Strom ermittelt wird; und
- das Abonnement einer der Ströme beendet wird, wenn die Verlustrate eine vorbestimmte Schwelle überschreitet.

10. Quelle von an eine Vielzahl von Empfängern (CL) in einem Telelcommunikationsnetz (1) gemäß einer Rundsendungsstrategie rundgesendeten Daten, **dadurch gekennzeichnet, dass** sie aufweist:
- Einrichtungen (14) zum Empfang von Parametern (STAT, AG, CS);
- Einrichtungen (11) zur Anpassung der Strategie abhängig von den Parametern; und
- Einrichtungen (14) zur Rundsendung, in einem Multicast-Signalisierungskanal, einer Kennung (SEQ) einer neuen Rundsendungsstrategie.

11. Überwacher der Rundsendung von von einer Multicast-Quelle (S) gemäß einer Rundsendungsstrategie an eine Vielzahl von Empfängern (CL) in einem Telekommunikationsnetz (1) gesendeten Daten, **dadurch gekennzeichnet, dass** er aufweist:
- Einrichtungen zum Senden an mindestens einen der Empfänger von Informationen betreffend die Quelle, wobei die Informationen eine Identifikation eines der Quelle zugeordneten Multicast-Signalisierungskanals enthalten, der dazu bestimmt ist, eine Kennung (SEQ) der Strategie rundzusenden;
- Einrichtungen (34) zum Erhalt, von mindestens einem der Empfänger (CL), von Statistiken (STAT) des Empfangs durch den Empfänger von Fragmenten der Daten, die von der Quelle gemäß der Strategie rundgesendet werden;
- Einrichtungen (31) zum Erhalt von Parametern (CS, AG) ausgehend von den Statistiken (STAT), wobei die Parameter mindestens aufweisen:
- einen aggregierten Datenwert (AG), der von einer Vielzahl der Empfänger erwartete Empfangsdurchsätze (EXP_DB) enthält; oder
- Merkmale (CS) einer neuen Rundsendungsstrategie der Daten;
- Einrichtungen (35) zum Senden der Parameter (CS, AG) an die Quelle.

12. Empfänger mindestens eines Datenstroms, der von mindestens einer Multicast-Quelle (S) gemäß einer Rundsendungsstrategie in einem ersten Telekommunikationsnetz (1) rundgesendet wird, **dadurch gekennzeichnet, dass** er aufweist:
- Einrichtungen (31) zur Erfassung, in einem von einer Quelle (S) der Daten rundgesendeten Multicast-Signalisierungskanal, einer Kennung (SEQ) einer von der Quelle (S) angewendeten neuen Rundsendungsstrategie; und
- Einrichtungen (31) zur Anwendung einer neuen Empfangsstrategie der Daten.

13. Computerprogramm, das Anweisungen für die Ausführung der Schritte des Datenrundsendungsverfahrens nach Anspruch 1 aufweist, wenn das Programm von einem Computer ausgeführt wird.

14. Computerprogramm, das Anweisungen für die Ausführung der Schritte des Überwachungsverfahrens nach Anspruch 3 aufweist, wenn das Programm von einem Computer ausgeführt wird.

15. Computerprogramm, das Anweisungen für die Ausführung der Schritte des Datenempfangsverfahrens nach Anspruch 5 aufweist, wenn das Programm von einem Computer ausgeführt wird.
